# EUROPÄISCHE PATENTSCHRIFT

(11) **EP 1 843 457 B1**
(45) Veröffentlichungstag und Bekanntmachung des Hinweises auf die Patenterteilung: **12.05.2010**
(21) Anmeldenummer: 06405150.1
(22) Anmeldetag: 06.04.2006
(51) Int. Cl.: H02M 7/758, B60L 9/00

(54) **Verfahren zum Betrieb einer Traktionsumrichterschaltung**
Method for the operation of a traction converter circuit
Procédé d'exploitation d'un mutateur de traction

(43) Veröffentlichungstag der Anmeldung: 10.10.2007
(73) Patentinhaber: ABB Schweiz AG, 5400 Baden (CH)
(72) Erfinder: Daehler, Peter, CH-5236 Remigen (CH); Guggisberg, Beat, CH-5417 Untersiggenthal (CH)
(74) Vertreter: ABB Patent Attorneys

(56) Entgegenhaltungen:
- EP-A- 1 479 558

## Beschreibung

### Technisches Gebiet

Die Erfindung bezieht sich auf das Gebiet der Leistungselektronik. Sie geht aus von einem Verfahren zum Betrieb einer Traktionsumrichterschaltung zur Ankopplung an ein elektrisches Gleichspannungsnetz gemäss dem Oberbegriff des unabhängigen Anspruchs.

### Stand der Technik

Traktionsumrichterschaltungen werden heute in einer Fülle von leistungselektronischen Anwendungen insbesondere für schienengebundene Fahrzeuge, wie elektrische Bahnen eingesetzt. Besonders bei länderübergreifendem Einsatz schienengebundener Fahrzeuge muss die Antriebsenergie aus verschiedenen elektrischen Versorgungsnetzen, d.h. aus verschiedenen elektrischen Gleichspannungsnetzen und Wechselspannungsnetzen unterschiedlicher Netzspannung entnommen oder eingespeist werden können. Dazu sind Traktionsumrichterschaltungen nötig, die sowohl an ein elektrisches Versorgungsnetz basierend auf einer Gleichspannung als auch an ein elektrisches Versorgungsnetz basierend auf einer Wechselspannung ankoppelbar sind. Gängige elektrische Versorgungsnetze, insbesondere für Bahnnetze, mit einer Wechselspannungsquelle basieren auf einer Wechselspannung von 15kV mit einer Frequenz von 16 2/3Hz oder von 25kV und 50Hz. Gängige elektrische Versorgungsnetze, insbesondere für Bahnnetze, mit einer Gleichspannungsquelle basieren auf einer Gleichspannung von 1,5kV oder 3kV. Eine geeignete Traktionsumrichterschaltung zur Ankopplung an ein elektrisches Gleichspannungsnetz ist beispielsweise in der DE 1 479 558 A1 angegeben. Darin umfasst die Traktionsumrichterschaltung einen Netzumrichter, welcher Netzumrichter gleichspannungsseitig mit einem Gleichspannungskreis verbunden ist, wobei der Gleichspannungskreis an das elektrische Gleichspannungsnetz schaltbar ist. Zudem weist die Traktionsumrichterschaltung einen Transformator mit einer Primärwicklung und einer Sekundärwicklung auf, wobei der Netzumrichter wechselspannungsseitig mit der Primärwicklung des Transformators verbunden ist. Weiterhin ist eine Umrichtereinheit vorgesehen, welche Umrichtereinheit wechselspannungsseitig mit der Sekundärwicklung des Transformators verbunden ist. Verfahrensmässig wird der Netzumrichter mittels eines vorgebbaren Netzumrichteransteuersignals zur Einstellung der Netzumrichterwechselspannung angesteuert wird, wobei das Netzumrichteransteuersignal typischerweise durch Pulsweitenmodulation eines sinusförmigen Signals, üblicherweise eines sinusförmigen Spannungssignals, mit einem Dreiecksignal erzeugt wird, wodurch sich gängigerweise eine Schaltfrequenz im Kilohertzbereich ergibt.

Der Netzumrichter erzeugt an seiner Wechselspannungsseite eine Spannung mit einer Grundfrequenz von beispielsweise 100Hz. Als Konsequenz entsteht eine doppeltfrequente Leistungsoszillation von dann 200Hz, die nicht an die Gleichspannungsseite in den Gleichspannungskreis und damit in das elektrische Gleichspannungsnetz weitergegeben werden darf. Zu diesem Zweck muss ein Filterkreis (Saugkreis) in Form eines LC-Filters am Gleichspannungskreis vorgesehen werden, welcher im wesentlichen auf die doppelte Grundfrequenz der Spannung an der Wechselspannungsseite des Netzumrichters abgestimmt ist, damit dieser doppeltfrequente Spannungsanteil auf der Gleichspannungsseite des Netzumrichters ausgefiltert werden kann. Ein solcher Filterkreis an der Gleichspannungsseite ist aber sehr schwer, benötigt sehr viel Platz, ist verlustbehaftet, verringert die Zuverlässigkeit der Traktionsumrichterschaltung und erhöht die Hardwarekosten signifikant.

Eine gattungsgemässe Traktionsumrichterschaltung der eingangs beschriebenen Art ist beispielsweise in der EP 1 479 558 A1 angegeben.

### Darstellung der Erfindung

Aufgabe der Erfindung ist es deshalb, ein Verfahren zum Betrieb einer Traktionsumrichterschaltung zur Ankopplung an ein elektrisches Gleichspannungsnetz anzugeben, durch welches die Traktionsumrichterschaltung vereinfacht werden kann. Diese Aufgabe wird durch die Merkmale des Anspruchs 1 gelöst. In den abhängigen Ansprüchen sind vorteilhafte Weiterbildungen der Erfindung angegeben.

Bei dem erfindungsgemässe Verfahren zum Betrieb einer Traktionsumrichterschaltung zur Ankopplung an ein elektrisches Gleichspannungsnetz umfasst die Traktionsumrichterschaltung einen Netzumrichter, welcher Netzumrichter gleichspannungsseitig mit einem Gleichspannungskreis verbunden ist, wobei der Gleichspannungskreis an das elektrische Gleichspannungsnetz schaltbar ist. Weiterhin umfasst die Traktionsumrichterschaltung einen Transformator mit einer Primärwicklung und einer Sekundärwicklung, wobei der Netzumrichter wechselspannungsseitig mit der Primärwicklung des Transformators verbunden ist, sowie eine Umrichtereinheit, welche Umrichtereinheit wechselspannungsseitig mit der Sekundärwicklung des Transformators verbunden ist. Verfahrensmässig wird der Netzumrichter mittels eines vorgebbaren Netzumrichteransteuersignals zur Einstellung der Netzumrichterwechselspannung angesteuert. Erfindungsgemäss ist das Netzumrichteransteuersignal ein Rechtecksignal, welches einem Referenzrechtecksignal folgt. Dadurch ergibt sich auf der Gleichspannungsseite des Netzumrichters lediglich eine sehr niederfrequente Leistungsoszillation mit geringer Amplitude, so dass vorteilhaft auf einen aus dem Stand der Technik bekannten Filterkreis am Gleichspannungskreis verzichtet werden kann und sich die Traktionsumrichterschaltung damit stark vereinfacht. Aus der Einsparung des Filterkreises durch das erfindungsgemässe Verfahren können bezüglich der Traktionsumrichterschaltung ferner Gewicht, Platz und Hardwarekosten markant eingespart werden, sowie Verluste verringert und die Zuverlässigkeit und Verfügbarkeit der Traktionsumrichterschaltung erhöht werden. Die Ausnutzung der Leistungshalbleiterschalter des Netzstromrichters erhöht sich durch das rechteckförmige Netzumrichteransteuersignal ebenfalls, wobei sich die thermische Belastung verringert.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

### Kurze Beschreibung der Zeichnung

Es zeigt:
- Fig. 1: eine Ausführungsform einer Traktionsumrichterschaltung zur Ankopplung an ein elektrisches Gleichspannungsnetz,
- Fig. 2: zeitlicher Verlauf physikalischer Grössen der Traktionsumrichterschaltung bei einem elektrischen Energiefluss vom Netzumrichter der Traktionsumrichterschaltung zu der Umrichtereinheit der Traktionsumrichterschaltung nach dem erfindungsgemässen Verfahren,
- Fig. 3: zeitlicher Verlauf des Referenzrechtecksignals und des Netzumrichteransteuersignals der Traktionsumrichterschaltung nach einer Variante des erfindungsgemässen Verfahrens und
- Fig. 4: zeitlicher Verlauf physikalischer Grössen der Traktionsumrichterschaltung bei einem elektrischen Energiefluss vom Netzumrichter der Traktionsumrichterschaltung zu der Umrichtereinheit der Traktionsumrichterschaltung nach dem erfindungsgemässen Verfahren.

Die in der Zeichnung verwendeten Bezugszeichen und deren Bedeutung sind in der Bezugszeichenliste zusammengefasst aufgelistet. Grundsätzlich sind in der Figur gleiche Teile mit gleichen Bezugszeichen versehen. Die beschriebenen Ausführungsformen stehen beispielhaft für den Erfindungsgegenstand und haben keine beschränkende Wirkung.

### Wege zur Ausführung der Erfindung

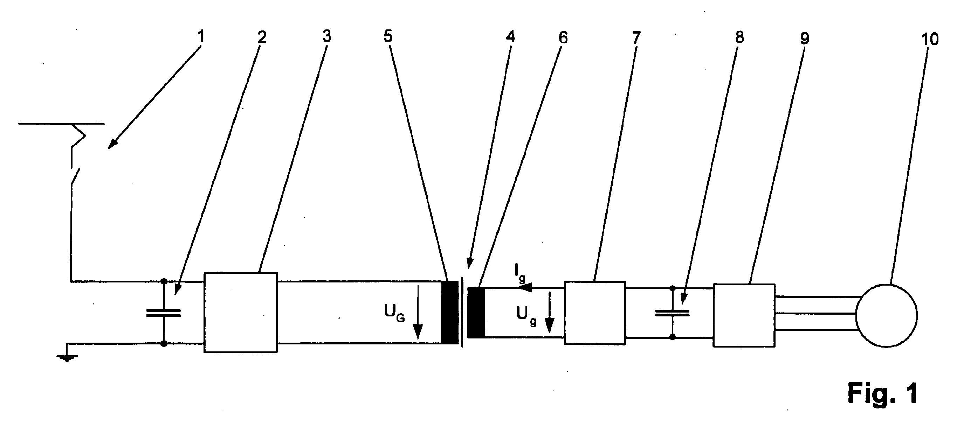

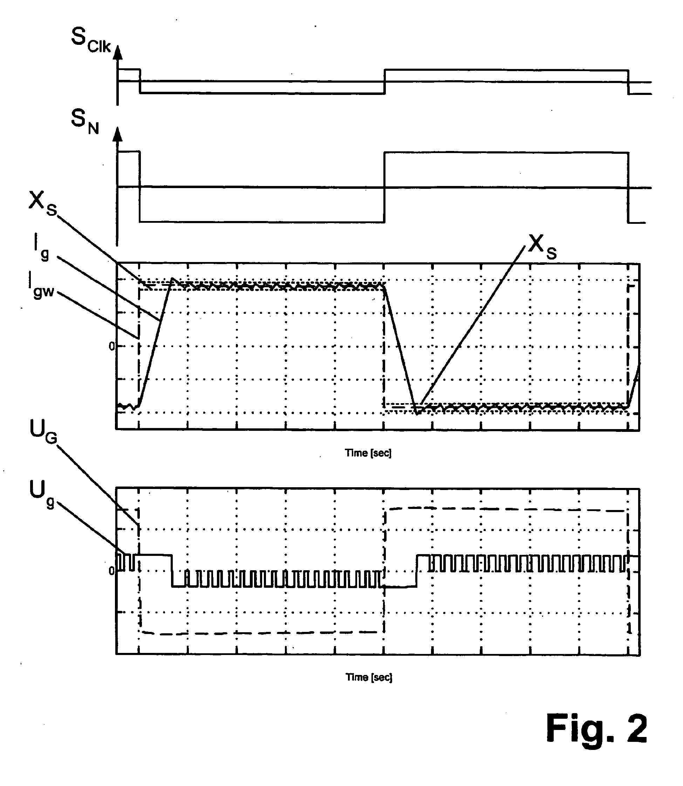

In Fig. 1 ist eine Ausführungsform einer Traktionsumrichterschaltung zur Ankopplung an ein elektrisches Gleichspannungsnetz 1 gezeigt. Das elektrische Gleichspannungsnetz weist typischerweise eine Gleichspannung von 1,5kV oder 3kV auf. Die in Fig. 1 dargestellte Traktionsumrichterschaltung zur Ankopplung an das elektrische Gleichspannungsnetz 1 umfasst einen Netzumrichter 2, welcher Netzumrichter 2 gleichspannungsseitig mit einem Gleichspannungskreis 3 verbunden ist, wobei der Gleichspannungskreis 3 an das elektrische Gleichspannungsnetz 1 schaltbar ist. Der Gleichspannungskreis 3 weist einen kapazitiven Energiespeicher auf, kann aber auch mehrere, insbesondere in Serie geschaltete kapazitive Energiespeicher aufweisen. Weiterhin umfasst die Traktionsumrichterschaltung einen Transformator 4 mit einer Primärwicklung 5 und einer Sekundärwicklung 6, wobei der Netzumrichter 2 wechselspannungsseitig mit der Primärwicklung 5 des Transformators 4 verbunden ist. Darüber hinaus weist die Traktionsumrichterschaltung eine Umrichtereinheit 7 auf, welche Umrichtereinheit 7 wechselspannungsseitig mit der Sekundärwicklung 6 des Transformators 4 verbunden ist. An die Gleichspannungsseite der Umrichtereinheit 7 kann, wie beispielhaft in Fig. 1 gezeigt, ein Gleichspannungskreis 8 angeschlossen sein, mit welchem beispielsweise ein Antriebsumrichter 9 verbunden ist, der beispielsweise einen Antriebsmotor 10 speist. Verfahrensmässig wird der Netzumrichter 2 mittels eines vorgebbaren Netzumrichteransteuersignals S_{N} zur Einstellung der Netzumrichterwechselspannung U_{G} angesteuert. Erfindungsgemäss ist das Netzumrichteransteuersignal S_{N} ein Rechtecksignal, welches einem Referenzrechtecksignal S_{Clk} folgt. Insbesondere das Referenzrechtecksignal S_{Clk} und das Netzumrichteransteuersignal S_{N} weisen jeweils einen periodischen Verlauf auf, wobei es sich als besonders vorteilhaft erwiesen hat, dass die Periodendauer des Netzumrichteransteuersignals S_{N} zwischen 5ms und 25ms gewählt wird. Bei einem elektrischen Energiefluss vom Netzumrichter 3 zu der Umrichtereinheit 7 zeigt Fig. 2 dazu den zeitlichen Verlauf des Referenzrechtecksignals S_{Clk} und des Netzumrichteransteuersignals S_{N} nach dem erfindungsgemässen Verfahren sowie weitere physikalischer Grössen der Traktionsumrichterschaltung, die noch detailliert beschrieben werden.

Dadurch, dass das Netzumrichteransteuersignal S_{N} ein Rechtecksignal ist, welches einem Referenzrechtecksignal S_{Clk} folgt, ergibt sich auf der Gleichspannungsseite des Netzumrichters 3 nur eine sehr niederfrequente Leistungsoszillation mit kleiner Amplitude, so dass vorteilhaft auf einen aus dem Stand der Technik bekannten Filterkreis am Gleichspannungskreis 2 verzichtet werden kann und sich die Traktionsumrichterschaltung damit stark vereinfacht. Aus der Einsparung des Filterkreises durch das erfindungsgemässe Verfahren können bezüglich der Traktionsumrichterschaltung ferner Gewicht, Platz und Hardwarekosten deutlich eingespart werden, sowie Verluste verringert und die Zuverlässigkeit und Verfügbarkeit der Traktionsumrichterschaltung erhöht werden. Zudem werden die Leistungshalbleiterschalter des Netzstromrichters 3 durch das rechteckförmige Netzumrichteransteuersignal S_{N} vorteilhaft besser ausgenutzt, wobei sich die thermische Belastung verringert.

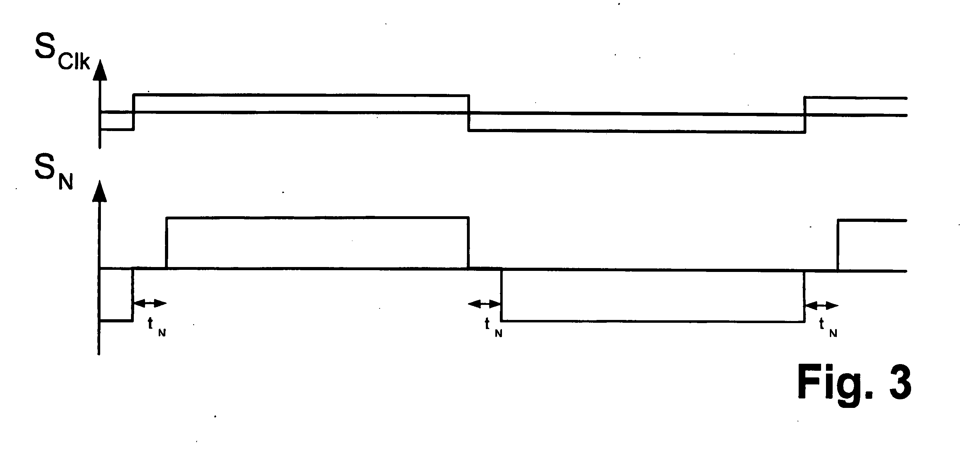

In Fig. 3 ist ein zeitlicher Verlauf des Referenzrechtecksignals S_{Clk} und des Netzumrichteransteuersignals S_{N} der Traktionsumrichterschaltung nach einer Variante des erfindungsgemässen Verfahrens dargestellt, insbesondere bei einem elektrischen Energiefluss vom Netzumrichter 3 zu der Umrichtereinheit 7. Dabei weist das Rechtecksignal des Netzumrichteransteuersignals S_{N} bei jedem Polaritätswechselzeitpunkt des Netzumrichteransteuersignals S_{N} zunächst einen Nullwert für eine einstellbare Zeitdauer t_{N} auf, wobei dann nach Ablauf der einstellbaren Zeitdauer t_{N} der Polaritätswechsel vollzogen wird. Vorteilhaft können durch diese Massnahme unerwünschte Überspannungen an offenen Transformatorwicklungen, welche Traktionsumrichterschaltungen typischerweise aufweisen können, in Fig. 1 aber der Übersichtlichkeit halber nicht dargestellt sind, vermieden werden, da mit Vorteil eine Dämpfung der Spannung an der jeweiligen offenen Transformatorwicklung erfolgt. Vorzugsweise wird als Zeitdauer t_{N} maximal 10% der halben Periodendauer des Referenzrechtecksignals S_{Clk} eingestellt. Eine derart gewählte Zeitdauer t_{N} entspricht mit Vorteil der halben Resonanzzykluszeit eines äquivalenten gedämpften RLC-Schwingkreises.

Wie bereits erwähnt, zeigt Fig. 2 den zeitlichen Verlauf des Referenzrechtecksignals S_{Clk} und des Netzumrichteransteuersignal S_{N} sowie weitere physikalischer Grössen der Traktionsumrichterschaltung bei einem elektrischen Energiefluss vom Netzumrichter 3 zu der Umrichtereinheit 7. Der elektrische Energiefluss vom Netzumrichter 3 zu der Umrichtereinheit 7 entspricht bei einer Traktionsumrichterschaltung, welche beispielsweise in einem Fahrzeug, insbesondere in einem schienengebundenen Fahrzeug, Verwendung findet, dem Betriebszustand "Fahren", da die Umrichtereinheit 7 in diesem Betriebszustand den Gleichspannungskreis 8 speist, aus welchem dann der Antriebsmotor 10 durch den Antriebsumrichter 9 gespeist wird. Verfahrensmässig wird der Netzumrichter 2, wie bereits beschrieben, mittels des Netzumrichteransteuersignals S_{N} zur Einstellung der Netzumrichterwechselspannung U_{G} angesteuert, so dass die Netzumrichterwechselspannung U_{G}, wie in Fig. 2 gezeigt, einen dem Netzumrichteransteuersignal S_{N} entsprechenden rechteckförmigen gleichphasigen Verlauf aufweist. Gemäss Fig. 2 wird die Umrichtereinheit 7 entsprechend einem Umrichtereinheitstromreferenzsignal I_{gw} angesteuert. Das Umrichtereinheitstromreferenzsignal l_{gw} ist vorzugsweise auch ein Rechtecksignal. Bei dem elektrischen Energiefluss vom Netzumrichter 2 zu der Umrichtereinheit 7 gemäss Fig. 2 folgt das Netzumrichteransteuersignal S_{N} dem Referenzrechtecksignal S_{Clk} gleichphasig, d.h. bezüglich des zeitlichen Ablaufs ist das Netzumrichteransteuersignal S_{N} in Phase mit dem Referenzrechtecksignal S_{Clk}. Weiterhin wird das Umrichtereinheitstromreferenzsignal l_{gw} gemäss Fig. 2 dann gegenphasig zu dem Referenzrechtecksignal S_{Clk} gewählt, wobei der Polaritätswechselzeitpunkt des Umrichtereinheitstromreferenzsignal l_{gw} dem Polaritätswechselzeitpunkt des Referenzrechtecksignals S_{Clk} entspricht. Ferner folgt der Umrichtereinheitstrom l_{g} an der Sekundärwicklung 6 des Transformators 4 gemäss Fig. 2 dem Umrichtereinheitstromreferenzsignal l_{gw}, d.h. der Umrichtereinheitstrom l_{g} wird insbesondere auf das Umrichtereinheitstromreferenzsignal l_{gw} geregelt, wobei der Umrichtereinheitstrom l_{g} aufgrund der Transformatorstreuinduktivität einen im wesentlichen trapezförmigen Verlauf aufweist. Für die vorstehend genannte Ausregelung ist insbesondere ein Stromregler vorgesehen. Zudem wird der Umrichtereinheitstrom l_{g} nach dem erfindungsgemässen Verfahren auf einen Schwellwert Xₛ eines Toleranzbereichs um den konstanten Wert des Umrichtereinheitstromreferenzsignals l_{gw} herum hin überwacht. Das Toleranzband um den konstanten Wert des Umrichtereinheitstromreferenzsignals l_{gw} ist in Fig. 2 als zwei gepunktete Linien angedeutet, wobei der zeitliche Verlauf des Umrichtereinheitstromreferenzsignals l_{gw} als gestrichelte Linie angedeutet ist. Bei erstmaligem Erreichen des Schwellwertes Xₛ innerhalb einer halben Periodendauer des Referenzrechtecksignals S_{Clk} wird dann die Umrichtereinheitspannung U_{g} an der Sekundärwicklung 6 des Transformators 4 durch entsprechende Ansteuerung der Umrichtereinheit 7 auf die Polarität des Referenzrechtecksignals S_{Clk} geschaltet, wie in Fig. 2 dargestellt. Bei erstmaligem Erreichen des Schwellwertes Xₛ innerhalb einer halben Periodendauer des Referenzrechtecksignals S_{Clk} wird der Umrichtereinheitstrom l_{g} durch entsprechende Ansteuerung der Umrichtereinheit 7 vorzugsweise innerhalb des Toleranzbereichs gehalten und behält damit vorteilhaft seine Polarität, wie in Fig. 2 gezeigt, bis zum nächsten Polaritätswechselzweitpunkt bei. Der Verlauf der Umrichtereinheitspannung U_{g} gemäss Fig. 2 ergibt sich aus der besagten Ansteuerung der Umrichtereinheit 7 bei erstmaligem Erreichen des Schwellwertes Xₛ und durch entsprechende Ansteuerung der Umrichtereinheit 7 damit der Umrichtereinheitstrom l_{g} innerhalb des Toleranzbereichs gehalten wird. Insgesamt können die Leistungshalbleiterschalter der Umrichtereinheit 7 durch die recheckförmige Vorgabe des Umrichtereinheitstromreferenzsignals I_{gw} und das Folgen des Umrichtereinheitstrom Ig sowie durch die weiteren vorstehend beschriebenen Massnahmen sehr effizient ausgenutzt werden. Dadurch reduzieren sich die Verluste der Leistungshalbleiterschalter der Umrichtereinheit 7 und die Zuverlässigkeit der Umrichtereinheit 7 und damit der gesamten Traktionsumrichterschaltung wird erhöht.

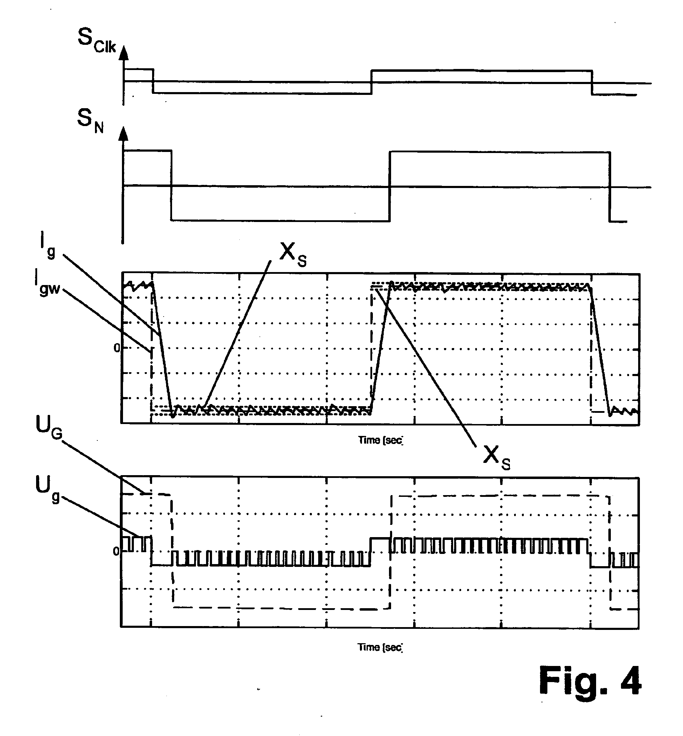

Fig. 4 zeigt den zeitlichen Verlauf des Referenzrechtecksignals S_{Clk}, des Netzumrichteransteuersignal S_{N}, des Umrichtereinheitstromreferenzsignals I_{gw}, des Umrichtereinheitstroms Ig, der Netzumrichterwechselspannung U_{G} und der Umrichtereinheitspannung U_{g} bei einem elektrischen Energiefluss von der Umrichtereinheit 7 zum Netzumrichter 2. Der elektrische Energiefluss von der Umrichtereinheit 7 zum Netzumrichter 2 entspricht bei einer Traktionsumrichterschaltung, welche beispielsweise in einem Fahrzeug, insbesondere in einem schienengebundenen Fahrzeug, Verwendung findet, dem Betriebszustand "Bremsen", da der Antriebsmotor 10 in diesem Betriebszustand den Gleichspannungskreis 8 über den Antriebsumrichter 9 speist, aus welchem dann elektrische Energie in das elektrische Gleichspannungsnetz 1 über die Umrichtereinheit 7, den Transformator 4 und den Netzumrichter 2 gespeist wird. Verfahrensmässig wird der Netzumrichter 2, wie bereits beschrieben, mittels des Netzumrichteransteuersignals S_{N} zur Einstellung der Netzumrichtennrechselspannung U_{G} angesteuert, so dass die Netzumrichterwechselspannung U_{G}, wie in Fig. 4 gezeigt, einen dem Netzumrichteransteuersignal S_{N} entsprechenden rechteckförmigen gleichphasigen Verlauf aufweist. Gemäss Fig. 4 wird die Umrichtereinheit 7 auch entsprechend dem Umrichtereinheitstromreferenzsignal I_{gw} angesteuert, wobei das Umrichtereinheitstromreferenzsignal I_{gw} vorzugsweise ebenfalls ein Rechtecksignal ist. Bei einem elektrischen Energiefluss von der Umrichtereinheit 7 zum Netzumrichter 2 gemäss Fig. 4 wird nun das Umrichtereinheitstromreferenzsignal l_{gw} gleichphasig zu dem Referenzrechtecksignal S_{Clk} gewählt, wobei der Polaritätswechselzeitpunkt des Umrichtereinheitstromreferenzsignal I_{gw} dem Polaritätswechselzeitpunkt des Referenzrechtecksignals S_{Clk} entspricht. Weiterhin folgt der Umrichtereinheitstrom I_{g} an der Sekundärwicklung 6 des Transformators 4 dem Umrichtereinheitstromreferenzsignal l_{gw}, d.h. der Umrichtereinheitstrom l_{g} wird insbesondere auf das Umrichtereinheitstromreferenzsignal l_{gw} geregelt, wobei der Umrichtereinheitstrom l_{g} aufgrund der Transformatorstreuinduktivität einen im wesentlichen trapezförmigen Verlauf aufweist.

Für die vorstehend genannte Ausregelung ist insbesondere besagter Stromregler vorgesehen. Zudem wird der Umrichtereinheitstrom Ig auf einen Schwellwert Xₛ eines Toleranzbereichs um den konstanten Wert des Umrichtereinheitstromreferenzsignals l_{gw} herum hin überwacht. Das Toleranzband um den konstanten Wert des Umrichtereinheitstromreferenzsignals l_{gw} ist in Fig. 4 als zwei gepunktete Linien angedeutet, wobei der zeitliche Verlauf des Umrichtereinheitstromreferenzsignals l_{gw} als gestrichelte Linie angedeutet ist. Bei erstmaligem Erreichen des Schwellwertes Xₛ innerhalb einer halben Periodendauer des Referenzrechtecksignals S_{Clk} wird dann die Umrichtereinheitspannung U_{g} an der Sekundärwicklung 6 des Transformators 4 durch entsprechende Ansteuerung der Umrichtereinheit 7 auf die Polarität des Referenzrechtecksignals S_{Clk} geschaltet und das Netzumrichteransteuersignal S_{N} auf die Polarität des Referenzrechtecksignals S_{Clk} geschaltet, wie in Fig. 4 gezeigt. Bei erstmaligem Erreichen des Schwellwertes X_{S} innerhalb einer halben Periodendauer des Referenzrechtecksignals S_{Clk} wird der Umrichtereinheitstrom l_{g} durch entsprechende Ansteuerung der Umrichtereinheit 7 vorzugsweise innerhalb des Toleranzbereichs gehalten und behält damit vorteilhaft seine Polarität, wie in Fig. 4 gezeigt, bis zum nächsten Polaritätswechselzweitpunkt bei. Der Verlauf der Umrichtereinheitspannung Ug gemäss Fig. 4 ergibt sich aus der besagten Ansteuerung der Umrichtereinheit 7 bei erstmaligem Erreichen des Schwellwertes Xₛ und durch entsprechende Ansteuerung der Umrichtereinheit 7 damit der Umrichtereinheitstrom l_{g} innerhalb des Toleranzbereichs gehalten wird. Insgesamt können die Leistungshalbleiterschalter der Umrichtereinheit 7 durch die recheckförmige Vorgabe des Umrichtereinheitstromreferenzsignals l_{gw} und das Folgen des Umrichtereinheitstrom Ig sowie durch die weiteren vorstehend beschriebenen Massnahmen auch bei einem elektrischen Energiefluss von der Umrichtereinheit 7 zum Netzumrichter 2 sehr effizient ausgenutzt werden. Dadurch reduzieren sich auch in diesem Betriebszustand der Traktionsumrichterschaltung die Verluste der Leistungshalbleiterschalter der Umrichtereinheit 7 und die Zuverlässigkeit der Umrichtereinheit 7 und damit der gesamten Traktionsumrichterschaltung wird erhöht.

### Bezugszeichenliste

- 1: elektrisches Gleichspannungsnetz
- 2: Netzumrichter
- 3: Gleichspannungskreis
- 4: Transformator
- 5: Primärwicklung des Transformators
- 6: Sekundärwicklung des Transformators
- 7: Umrichtereinheit
- 8: Gleichspannungskreis
- 9: Antriebsumrichter
- 10: Antriebsmotor

## Patentansprüche

1. Verfahren zum Betrieb einer Traktionsumrichterschaltung zur Ankopplung an ein elektrisches Gleichspannungsnetz (1), bei dem die Traktionsumrichterschaltung umfasst einen Netzumrichter (2), welcher Netzumrichter (2) gleichspannungsseitig mit einem Gleichspannungskreis (3) verbunden ist, wobei der Gleichspannungskreis (3) an das elektrische Gleichspannungsnetz (1) schaltbar ist,
einen Transformator (4) mit einer Primärwicklung (5) und einer Sekundärwicklung (6), wobei der Netzumrichter (2) wechselspannungsseitig mit der Primärwicklung (5) des Transformators (4) verbunden ist,
eine Umrichtereinheit (7), welche Umrichtereinheit (7) wechselspannungsseitig mit der Sekundärwicklung (6) des Transformators (4) verbunden ist, und
bei dem der Netzumrichter (2) mittels eines vorgebbaren Netzumrichteransteuersignals (S_{N}) zur Einstellung der Netzumrichterwechselspannung (U_{G}) angesteuert wird,
**dadurch gekennzeichnet,**
**dass** das Netzumrichteransteuersignal (S_{N}) ein Rechtecksignal ist, welches einem Referenzrechtecksignal (S_{Clk}) folgt.

2. Verfahren nach Anspruch 1, **dadurch gekennzeichnet, dass** die Periodendauer des Netzumrichteransteuersignals (S_{N}) zwischen 5ms und 25ms gewählt wird.

3. Verfahren nach Anspruch 1 oder 2, **dadurch gekennzeichnet, dass** das Rechtecksignal des Netzumrichteransteuersignals (S_{N}) bei jedem Polaritätswechselzeitpunkt des Netzumrichteransteuersignals (S_{N}) zunächst einen Nullwert für eine einstellbare Zeitdauer (t_{N}) aufweist, und
dass nach Ablauf der einstellbaren Zeitdauer (t_{N}) der Polaritätswechsel vollzogen wird.

4. Verfahren nach Anspruch 3, **dadurch gekennzeichnet, dass** als Zeitdauer (t_{N}) maximal 10% der halben Periodendauer des Referenzrechtecksignals (S_{Clk}) eingestellt wird.

5. Verfahren nach einem der vorhergehenden Ansprüche, **dadurch gekennzeichnet, dass** die Umrichtereinheit (7) entsprechend einem Umrichtereinheitstromreferenzsignal (I_{gw}) angesteuert wird.

6. Verfahren nach Anspruch 5, **dadurch gekennzeichnet, dass** das Umrichtereinheitstromreferenzsignal (I_{gw}) ein Rechtecksignal ist.

7. Verfahren nach Anspruch 6, **dadurch gekennzeichnet, dass** bei einem elektrischen E-nergiefluss vom Netzumrichter (2) zu der Umrichtereinheit (7) das Netzumrichteransteuersignal (S_{N}) dem Referenzrechtecksignal (S_{Clk}) gleichphasig folgt, dass
das Umrichtereinheitstromreferenzsignal (I_{gw}) gegenphasig zu dem Referenzrechtecksignal (S_{Clk}) gewählt wird, wobei der Polaritätswechselzeitpunkt des Umrichtereinheitstromreferenzsignal (I_{gw}) dem Polaritätswechselzeitpunkt des Referenzrechtecksignals (S_{Clk}) entspricht, und
dass der Umrichtereinheitstrom (I_{g}) an der Sekundärwicklung (6) des Transformators (4) dem Umrichtereinheitstromreferenzsignal (I_{gw}) folgt.

8. Verfahren nach Anspruch 7, **dadurch gekennzeichnet, dass** der Umrichtereinheitstrom (I_{g}) auf einen Schwellwert (Xₛ) eines Toleranzbereichs um den konstanten Wert des Umrichtereinheitstromreferenzsignals (I_{gw}) herum hin überwacht wird,
dass bei erstmaligem Erreichen des Schwellwertes (Xₛ) innerhalb einer halben Periodendauer des Referenzrechtecksignals (S_{Clk}) die Umrichtereinheitspannung (U_{g}) an der Sekundärwicklung (6) des Transformators (4) durch entsprechende Ansteuerung der Umrichtereinheit (7) auf die Polarität des Referenzrechtecksignals (S_{Clk}) geschaltet wird.

9. Verfahren nach Anspruch 6, **dadurch gekennzeichnet, dass** bei einem elektrischen E-nergiefluss von der Umrichtereinheit (7) zum Netzumrichter (2) das Umrichtereinheitstromreferenzsignal (I_{gw}) gleichphasig zu dem Referenzrechtecksignal (S_{Clk}) gewählt wird, wobei der Polaritätswechselzeitpunkt des Umrichtereinheitstromreferenzsignals (I_{gw}) dem Polaritätswechselzeitpunkt des Referenzrechtecksignals (S_{Clk}) entspricht, und dass der Umrichtereinheitstrom (I_{g}) an der Sekundärwicklung (6) des Transformators (4) dem Umrichtereinheitstromreferenzsignal (I_{gw}) folgt.

10. Verfahren nach Anspruch 9, **dadurch gekennzeichnet, dass** der Umrichtereinheitstrom (I_{g}) auf einen Schwellwert (Xₛ) eines Toleranzbereichs um den konstanten Wert des Umrichtereinheitstromreferenzsignals (I_{gw}) herum hin überwacht wird,
dass bei erstmaligem Erreichen des Schwellwertes (Xₛ) innerhalb einer halben Periodendauer des Referenzrechtecksignals (S_{Clk}) die Umrichtereinheitspannung (U_{g}) an der Sekundärwicklung (6) des Transformators (4) durch entsprechende Ansteuerung der Umrichtereinheit (7) auf die Polarität des Referenzrechtecksignals (S_{Clk}) geschaltet wird und das Netzumrichteransteuersignal (S_{N}) auf die Polarität des Referenzrechtecksignals (S_{Clk}) geschaltet wird.

11. Verfahren nach Anspruch 8 oder 10, **dadurch gekennzeichnet, dass** bei erstmaligem Erreichen des Schwellwert (Xₛ) innerhalb einer halben Periodendauer des Referenzrechtecksignals (S_{Clk}) der Umrichtereinheitstrom (I_{g}) durch entsprechende Ansteuerung der Umrichtereinheit (7) innerhalb des Toleranzbereichs gehalten wird.

## Claims

1. Method for operating a traction converter circuit for coupling to an electrical DC voltage network (1), in which the traction converter circuit comprises
a network converter (2) which is connected, on the DC voltage side, to a DC voltage circuit (3), the DC voltage circuit (3) being able to be connected to the electrical DC voltage network (1),
a transformer (4) having a primary winding (5) and a secondary winding (6), the network converter (2) being connected, on the AC voltage side, to the primary winding (5) of the transformer (4),
a converter unit (7) which is connected, on the AC voltage side, to the secondary winding (6) of the transformer (4), and
in which the network converter (2) is driven by means of a predefinable network converter drive signal (S_{N}) in order to set the network converter AC voltage (U_{G}),
**characterized in that**
the network converter drive signal (S_{N}) is a square-wave signal which follows a reference square-wave signal (S_{Clk}).

2. Method according to Claim 1, **characterized in that** the period duration of the network converter drive signal (S_{N}) is selected to be between 5 ms and 25 ms.

3. Method according to Claim 1 or 2, **characterized in that**, at each polarity change time of the network converter drive signal (S_{N}), the square-wave signal of the network converter drive signal (S_{N}) first of all has a zero value for an adjustable period of time (t_{N}), and
**in that** the polarity is changed after the adjustable period of time (t_{N}) has expired.

4. Method according to Claim 3, **characterized in that** at most 10% of half the period duration of the reference square-wave signal (S_{Clk}) is set as the period of time (t_{N}).

5. Method according to one of the preceding claims, **characterized in that** the converter unit (7) is driven according to a converter unit current reference signal (I_{gw}).

6. Method according to Claim 5, **characterized in that** the converter unit current reference signal (I_{gw}) is a square-wave signal.

7. Method according to Claim 6, **characterized in that**, when electrical energy flows from the network converter (2) to the converter unit (7), the network converter drive signal (S_{N}) follows the reference square-wave signal (S_{Clk}) such that it is in phase with the latter, **in that**
the converter unit current reference signal (I_{gw}) is selected to be in phase opposition to the reference square-wave signal (S_{Clk}), the polarity change time of the converter unit current reference signal (I_{gw}) corresponding to the polarity change time of the reference square-wave signal (S_{Clk}), and
**in that** the converter unit current (Ig) at the secondary winding (6) of the transformer (4) follows the converter unit current reference signal (I_{gw}).

8. Method according to Claim 7, **characterized in that** the converter unit current (I_{g}) is monitored for a threshold value (Xₛ) of a tolerance range around the constant value of the converter unit current reference signal (I_{gw}),
**in that** the converter unit voltage (Ug) at the secondary winding (6) of the transformer (4) is switched to the polarity of the reference square-wave signal (S_{Clk}) by appropriately driving the converter unit (7) the first time the threshold value (Xₛ) is reached within half a period duration of the reference square-wave signal (S_{Clk}).

9. Method according to Claim 6, **characterized in that**, when electrical energy flows from the converter unit (7) to the network converter (2), the converter unit current reference signal (I_{gw}) is selected to be in phase with the reference square-wave signal (S_{Clk}), the polarity change time of the converter unit current reference signal (I_{gw}) corresponding to the polarity change time of the reference square-wave signal (S_{Clk}), and
**in that** the converter unit current (Ig) at the secondary winding (6) of the transformer (4) follows the converter unit current reference signal (I_{gw}).

10. Method according to Claim 9, **characterized in that** the converter unit current (Ig) is monitored for a threshold value (Xₛ) of a tolerance range around the constant value of the converter unit current reference signal (I_{gw}),
**in that** the converter unit voltage (Ug) at the secondary winding (6) of the transformer (4) is switched to the polarity of the reference square-wave signal (S_{Clk}) by appropriately driving the converter unit (7) and the network converter drive signal (S_{N}) is switched to the polarity of the reference square-wave signal (S_{Clk}) the first time the threshold value (Xₛ) is reached within half a period duration of the reference square-wave signal (S_{Clk}).

11. Method according to Claim 8 or 10, **characterized in that** the converter unit current (I_{g}) is kept within the tolerance range by appropriately driving the converter unit (7) the first time the threshold value (Xₛ) is reached within half a period duration of the reference square-wave signal (S_{Clk}).

## Revendications

1. Procédé de gestion d'un circuit convertisseur de traction destiné à être raccordé à un réseau électrique (1) à tension continue, le circuit convertisseur de traction comprenant
un convertisseur réseau (2), ce convertisseur réseau (2) étant relié du côté tension continue à un circuit (3) à tension continue, le circuit (3) à tension continue pouvant être commuté sur le réseau électrique (1) à tension continue,
un transformateur (4) doté d'un bobinage primaire (5) et d'un bobinage secondaire (6), le convertisseur réseau (2) étant relié du côté tension alternative au bobinage primaire (5) du transformateur (4),
une unité de convertisseur (7), cette unité de convertisseur (7) étant reliée côté tension alternative au bobinage secondaire (6) du transformateur (4),
le convertisseur réseau (2) étant commandé au moyen d'un signal prédéterminé (S_{N}) de commande du convertisseur réseau pour régler la tension alternative (U_{G}) du convertisseur réseau,
**caractérisé en ce que**
le signal (S_{N}) de commande du convertisseur réseau est un signal rectangulaire qui suit un signal rectangulaire de référence (S_{Clk}).

2. Procédé selon la revendication 1, **caractérisé en ce que** la durée de la période du signal (S_{N}) de commande du convertisseur réseau est sélectionnée entre 5 ms et 25 ms.

3. Procédé selon les revendications 1 ou 2, **caractérisé en ce que** lors de chaque instant d'inversion de polarité, le signal rectangulaire du signal (S_{N}) de commande du convertisseur réseau présente initialement une valeur nulle pendant une durée réglable (t_{N}) du signal (S_{N}) de commande du convertisseur réseau et **en ce que** l'inversion de polarité est exécutée après que la durée réglable (t_{N}) s'est écoulée.

4. Procédé selon la revendication 3, **caractérisé en ce que** comme durée (t_{N}), il règle au maximum 10 % de la durée de la demi-période du signal rectangulaire de référence (S_{Clk}).

5. Procédé selon l'une des revendications précédentes, **caractérisé en ce que** l'unité de convertisseur (7) est commandée en fonction d'un signal de référence de courant (I_{gw}) de l'unité de convertisseur.

6. Procédé selon la revendication 5, **caractérisé en ce que** le signal de référence de courant (I_{gw}) de l'unité de convertisseur est un signal rectangulaire.

7. Procédé selon la revendication 6, **caractérisé en ce que** lorsque le flux d'énergie électrique va du convertisseur réseau (2) à l'unité de convertisseur (7), le signal (S_{N}) de commande du convertisseur réseau suit en accord de phase le signal rectangulaire de référence (S_{Clk}), **en ce que** le signal de référence de courant (I_{gw}) de l'unité de convertisseur est sélectionné en opposition de phase au signal rectangulaire de référence (S_{Clk}), **en ce que** l'instant d'inversion de polarité du signal de référence de courant (I_{gw}) de l'unité de convertisseur correspond à l'instant d'inversion de polarité du signal rectangulaire de référence (S_{Clk}) et **en ce que** le courant (Ig) de l'unité de convertisseur sur le bobinage secondaire (6) du transformateur (4) suit le signal de référence de courant (I_{gw}) de l'unité de convertisseur.

8. Procédé selon la revendication 7, **caractérisé en ce que** le courant (Ig) de l'unité de convertisseur est surveillé en fonction d'une valeur de seuil (Xₛ) d'une plage de tolérance autour de la valeur constante du signal de référence de courant (I_{gw}) de l'unité de convertisseur et **en ce que** lorsque la valeur de seuil (Xₛ) est atteinte pour la première fois à l'intérieur de la durée d'une demi-période du signal rectangulaire de référence (S_{Clk}), la tension (Ug) de l'unité de convertisseur sur le bobinage secondaire (6) du transformateur (4) est commutée sur la polarité du signal rectangulaire de référence (S_{Clk}) par commande appropriée de l'unité de convertisseur (7).

9. Procédé selon la revendication 6, **caractérisé en ce que** lorsque l'énergie électrique s'écoule de l'unité de convertisseur (7) au convertisseur réseau (2), le signal de référence de courant (I_{gw}) de l'unité de convertisseur est sélectionné sur la même phase que le signal rectangulaire de référence (S_{Clk}), **en ce que** l'instant d'inversion de la polarité du signal de référence du courant (I_{gw}) de l'unité de convertisseur correspond à l'instant d'inversion de polarité du signal rectangulaire de référence (S_{Clk}) et **en ce que** le courant (Ig) de l'unité de convertisseur sur le bobinage secondaire (6) du transformateur (4) suit le signal de référence de courant (I_{gw}) de l'unité de convertisseur.

10. Procédé selon la revendication 9, **caractérisé en ce que** le courant (Ig) de l'unité de convertisseur est surveillé à une valeur de seuil (Xₛ) d'une plage de tolérance autour de la valeur constante du signal de référence de courant (I_{gw}) de l'unité de convertisseur, **en ce que** lorsque la valeur de seuil (Xₛ) est atteinte pour la première fois à l'intérieur de la durée d'une demi-période du signal rectangulaire de référence (S_{Clk}), la tension (Ug) de l'unité de convertisseur sur le bobinage secondaire (6) du transformateur (4) est commutée sur la polarité du signal rectangulaire de référence (S_{Clk}) par commande appropriée de l'unité de convertisseur (7) et le signal (S_{N}) de commande du convertisseur réseau est commuté sur la polarité du signal rectangulaire de référence (S_{Clk}).

11. Procédé selon les revendications 8 ou 10, **caractérisé en ce que** lorsque la valeur de seuil (Xₛ) est atteinte pour la première fois à l'intérieur de la durée d'une demi-période du signal rectangulaire de référence (S_{Clk}), le courant (I_{g}) de l'unité de convertisseur est maintenu à l'intérieur de la plage de tolérance par commande appropriée de l'unité de convertisseur (7).
